# EUROPEAN PATENT SPECIFICATION

(11) **EP 3 399 376 B1**
(45) Date of publication and mention of the grant of the patent: **02.02.2022**
(21) Application number: 16881788.0
(22) Date of filing: 27.12.2016
(51) Int. Cl.: G05B 23/02

(54) **PLANT-ABNORMALITY-MONITORING METHOD AND COMPUTER PROGRAM FOR PLANT ABNORMALITY MONITORING**
VERFAHREN ZUR ÜBERWACHUNG VON ANOMALIEN BEI PFLANZEN UND COMPUTERPROGRAMM ZUR ÜBERWACHUNG VON ANOMALIEN
PROCÉDÉ ET PROGRAMME INFORMATIQUE DE CONTRÔLE D'ANOMALIES D'INSTALLATION POUR LE CONTRÔLE D'ANOMALIES D'INSTALLATION

(30) Priority: 28.12.2015 JP 2015256477
(43) Date of publication of application: 07.11.2018
(73) Proprietor: Kawasaki Jukogyo Kabushiki Kaisha, Kobe-shi, Hyogo 650-8670 (JP)
(72) Inventor: ENOMOTO, Masayuki, Akashi-shi, Hyogo 673-8666 (JP); FUJIHARA, Kazutsugu, Akashi-shi, Hyogo 673-8666 (JP); YOKOO, Atsushi, Akashi-shi, Hyogo 673-8666 (JP); OGURA, Yukihiro, Akashi-shi, Hyogo 673-8666 (JP)
(74) Representative: Dehns
(86) International application number: PCT/JP2016/088967
(87) International publication number: WO 2017/115814

(56) References cited:
- EP-A1- 2 897 012
- WO-A1-2014/064816
- JP-A- 2010 181 188
- JP-A- 2010 191 641
- JP-A- 2011 090 382
- JP-A- 2012 067 757

## Description

### Technical Field

The present invention relates to a plant-abnormality-monitoring method for monitoring the operation condition of a plant using the Mahalanobis distance and a computer program for plant abnormality monitoring, and particularly relates to a process for determining whether or not a reference-data update process is necessary in the plant-abnormality-monitoring method.

### Background Art

Regarding the operation condition of a plant, state quantities of many factors such as temperature, pressure, vibration, and the like generated in various facilities/devices in the plant are detected, and it is determined whether or not the plant is normally operated according to the detected state quantities. Recently, a method for monitoring an abnormality in the operation condition of a plant is proposed. In the method, the Mahalanobis distance is used by analyzing many state quantities detected as described above.

For example, Patent Literature 1 discloses a technique for monitoring the operation condition of a refrigeration cycle apparatus by using the Mahalanobis distance and selectively using a plurality of reference spaces (unit spaces) according to seasonal variations in a year or the like. In addition, Patent Literature 2 discloses a plant-condition-monitoring method for determining whether or not a plant operates normally even upon starting at which the operation condition differs from that under a rated load, and also even when an allowable level of performance degradation occurs due to aged deterioration of a device. In the plant-condition-monitoring method disclosed in Patent Literature 2, a unit space that is an aggregate of data in a fixed period serving as a criterion is created, the Mahalanobis distance is obtained from the unit space, and the obtained Mahalanobis distance is compared with a predetermined threshold value. Thus, it is determined whether or not the plant condition is normal.

Patent Literature 3 discloses data processing techniques for monitoring a plant.

Patent Literature 4 discloses a plant monitoring device, a plant monitoring program and a plant monitoring method which monitor a plant.

### Citation List

### Patent Literature

PLT 1: JP 2005-207644 A
PLT 2: JP 2012-067757 A
PLT 3: JP 2010-191641 A
PLT 4: EP 2 897 012 A1

### Summary of Invention

### Technical Problem

In a conventional plant-abnormality-monitoring method using the Mahalanobis distance, as described above, a normal distribution (unit space) serving as a criterion is created from normal data in a fixed period, the degree of deviation from the unit space is periodically calculated by using the Mahalanobis distance, the calculated Mahalanobis distance is compared with a predetermined threshold value, and thus plant abnormality monitoring is performed.

However, the conventional plant abnormality monitoring based on the Mahalanobis distance has a problem that, even in a case where the condition of the plant changes due to maintenance or the like, when a determination is made according to the reference data (including a unit space, a predetermined threshold value, and the like) before the condition changes, there is a possibility that sensitivity of plant abnormality detection lowers, that is, normality/abnormality is erroneously detected, and it is difficult to continuously perform abnormality monitoring with high accuracy. In addition, in the conventional plant-condition-monitoring method in Patent Literature 2, reference data is periodically and automatically updated according to a fixed period in the past. In the monitoring method of performing automatic updating periodically, in a case where reference data is updated according to data obtained at a time of an abnormality, there is a possibility that sensitivity of abnormality detection lowers.

In the field of plant abnormality monitoring, a top priority is to provide an abnormality monitoring method capable of reliably detecting a change in the condition of a facility/device which is a monitoring target in a plant, appropriately updating reference data as necessary, and constantly monitoring abnormality with high accuracy.

An object of the present invention is to provide an abnormality monitoring method and a computer program for plant abnormality monitoring, capable of reliably detecting a change in the condition of a plant even in a case where the condition of the plant changes due to maintenance or the like, capable of appropriately updating reference data as necessary according to the detected change in the condition, and capable of constantly performing abnormality monitoring with high accuracy.

### Solution to Problem

A plant-abnormality-monitoring method according to the present invention includes:
a step of creating a unit space for calculating a Mahalanobis distance, wherein the unit space comprises an aggregate of data and serves as a criterion for determining an operation condition of a plant from reference data from a past monitoring target, wherein the reference data is obtained during a reference period of the plant during a normal operation;
a step of collecting measurement data from the monitoring target in the operation condition of the plant;
a step of calculating a Mahalanobis distance of the measured data which is collected, according to the unit space which is created from an aggregate of the reference data;
a step of calculating and comparing a dispersion value of the reference data in the reference period and a dispersion value of measurement data in a most recent fixed period, which is shorter than the reference period, per fixed interval for the Mahalanobis distance which is calculated; and
a step of updating the reference data when a proportion of the dispersion value of the reference data in the reference period to the dispersion value of the measurement data in the most recent fixed period exceeds a criterion value serving as a threshold value.

A computer program for plant abnormality monitoring according to the present invention includes:
a procedure of creating a unit space for calculating a Mahalanobis distance, wherein the unit space comprises an aggregate of data and serves as a criterion for determining an operation condition of a plant from reference data from a past monitoring target, wherein the reference data is obtained during a reference period of the plant during a normal operation;
a procedure of collecting measurement data from the monitoring target in the operation condition of the plant;
a procedure of calculating a Mahalanobis distance of the measured data which is collected, according to the unit space which is created from an aggregate of the reference data;
a procedure of calculating and comparing a dispersion value of the reference data in the reference period and a dispersion value of measurement data in a most recent fixed period, which is shorter than the reference period, per fixed interval for the Mahalanobis distance which is calculated; and
a procedure of updating the reference data when a proportion of the dispersion value of the reference data in the reference period to the dispersion value of the measurement data in the most recent fixed period exceeds a criterion value serving as a threshold value.

### Advantageous Effects of Invention

According to the present invention, even in a case where the condition of the plant changes due to maintenance or the like, it is possible to reliably detect a change in the condition of the plant, to appropriately update reference data as necessary according to the detected change in the condition, and to constantly perform plant abnormality monitoring with high accuracy.

### Brief Description of Drawings

Fig. 1 is a block diagram schematically illustrating a configuration of an abnormality monitoring apparatus for monitoring a gas turbine power plant according to a first embodiment of the present invention.
Fig. 2 is a diagram conceptually illustrating a problem and a solution for the problem in an abnormality monitoring method.
Fig. 3 is graph illustrating an abnormal trend condition where the measurement data is rising.
Fig. 4 is a diagram conceptually illustrating an example of measurement data obtained by subjecting the measurement data illustrated in Fig. 3 to a low-frequency-component removal process.
Fig. 5 is a diagram illustrating specific three patterns of Mahalanobis distance data when a calculated Mahalanobis distance increases.
Fig. 6 is a diagram specifically illustrating a flow of calculating a difference value between Mahalanobis distances.
Fig. 7 is a flowchart of a reference data updating method in an abnormality monitoring method according to the first embodiment.
Fig. 8 is a diagram schematically illustrating a method for determining whether or not the Mahalanobis distance increases and a method for determining the difference value of the Mahalanobis distances in the abnormality monitoring method according to the first embodiment.
Fig. 9 is a diagram schematically illustrating a signal processing method by performing the low-frequency-component removal process and a dispersion comparison method in the abnormality monitoring method according to the first embodiment.

### Description of Embodiments

Hereinafter, an embodiment of the present invention will be described in detail with reference to the drawings. Note that before describing the embodiment of the present invention in detail with reference to the drawings, various aspects of the present invention will be described.

A plant-abnormality-monitoring method according a first aspect of the present invention includes:
a step of creating a unit space for calculating a Mahalanobis distance, wherein the unit space comprises an aggregate of data and serves as a criterion for determining an operation condition of a plant from reference data from a past monitoring target, wherein the reference data is obtained during a reference period of the plant during a normal operation;
a step of collecting measurement data from the monitoring target in an operation condition of the plant;
a step of calculating a Mahalanobis distance of the measured data which is collected, according to the unit space which is created from an aggregate of the reference data;
a step of calculating and comparing a dispersion value of the reference data in the reference period and a dispersion value of measurement data in a most recent fixed period, which is shorter than the reference period, per fixed interval for the Mahalanobis distance which is calculated; and
a step of updating the reference data when a proportion of the dispersion value of the reference data in the reference period to the dispersion value of the measurement data in the most recent fixed period exceeds a criterion value serving as a threshold value.

According to the plant-abnormality-monitoring method according the first aspect of the present invention as described above, even in a case where the condition of the plant changes due to maintenance or the like, it is possible to reliably detect a change in the condition, to appropriately update the reference data, and to constantly perform plant abnormality monitoring with high accuracy.

In a plant-abnormality-monitoring method according a second aspect of the present invention, in the step of calculating and comparing the dispersion value of the reference data and the dispersion value of the measurement data per fixed interval, according to the first aspect, after the reference data and the measurement data are subjected to a low-frequency-component removal process, a dispersion value of the reference data which is subjected to the low-frequency-component removal process and a measurement data which is subjected to the low-frequency-component removal process are calculated and compared per fixed interval.

In the plant-abnormality-monitoring method according to the second aspect as described above, it is not erroneously determined that the dispersion value has increased at a time of an abnormal trend, and therefore it is possible to prevent an unfavorable process for updating the reference data from being executed.

In a plant-abnormality-monitoring method according to a third aspect of the present invention, the first aspect or the second aspect further includes:
a step of calculating a difference value between Mahalanobis distances at a fixed interval in a Mahalanobis distance group in a fixed period when a Mahalanobis distance which is calculated exceeds a reference value serving as a threshold value, the Mahalanobis distance group including the Mahalanobis distance exceeding the reference value; and
a step of notifying that necessity of a process for updating the reference data is high when the difference value calculated exceeds a set value serving as a threshold value.

In the plant-abnormality-monitoring method according to the third aspect, even in a case where the condition of the plant changes due to maintenance or the like, it is possible to detect the change in the condition by using the difference value, and to notify that necessity of the process for updating the reference data is high according to the detected change in the condition, and to constantly perform plant abnormality monitoring with high accuracy.

A computer program for plant abnormality monitoring according to a fourth aspect the present invention includes:
a procedure of creating a unit space for calculating a Mahalanobis distance, wherein the unit space comprises an aggregate of data and serves as a criterion for determining an operation condition of a plant from reference data from a past monitoring target, wherein the reference data is obtained during a reference period of the plant during a normal operation;
a procedure of collecting measurement data from the monitoring target in the operation condition of the plant;
a procedure of calculating a Mahalanobis distance of the measured data which is collected, according to the unit space which is created from an aggregate of the reference data;
a procedure of calculating and comparing a dispersion value of the reference data in the reference period and a dispersion value of measurement data in a most recent fixed period, which is shorter than the reference period, per fixed interval for the Mahalanobis distance which is calculated; and
a procedure of updating the reference data when a proportion of the dispersion value of the reference data in the reference period to the dispersion value of the measurement data in the most recent fixed period exceeds a criterion value serving as a threshold value.

By using the computer program for plant abnormality monitoring according to the fourth aspect as described above, even in a case where the condition of the plant changes due to maintenance or the like, it is possible to reliably detect the change in the condition, to appropriately update the reference data, and to constantly perform plant abnormality monitoring with high accuracy.

In a computer program for plant abnormality monitoring according a fifth aspect of the present invention, in the procedure of calculating and comparing the dispersion value of the reference data and the dispersion value of the measurement data per fixed interval, according to the fourth aspect, after the reference data and the measurement data are subjected to a low-frequency component removal process, a dispersion value of the reference data which is subjected to the low-frequency-component removal process and a dispersion value of the measurement data which is subjected to the low-frequency-component removal process are calculated and compared per fixed interval.

By using the computer program for plant abnormality monitoring according to the fifth aspect as described above, it is not erroneously determined that the dispersion value has increased at a time of an abnormal trend, and therefore it is possible to prevent an unfavorable process for updating the reference data from being executed.

A computer program for plant abnormality monitoring according a sixth aspect of the present invention includes:
a procedure of calculating a difference value between Mahalanobis distances at a fixed interval in a Mahalanobis distance group in a fixed period when the Mahalanobis distance which is calculated according to the fourth or fifth aspect exceeds a reference value serving as a threshold value, the Mahalanobis distance group including the Mahalanobis distance exceeding the reference value; and
a procedure of notifying that necessity of a process for updating the reference data is high when the difference value calculated exceeds a set value serving as a threshold value.

By using the computer program for plant abnormality monitoring according to the sixth aspect as described above, even in a case where the condition of the plant changes due to maintenance or the like, it is possible to detect the change in the condition by using the difference value, to notify that necessity of the process for updating the reference data is high according to the detected change in the condition, and to constantly perform plant abnormality monitoring with high accuracy.

In the following embodiment, an abnormality monitoring method and the like for a power plant using an industrial gas turbine will be described. However, the present invention is not limited to a gas turbine power plant, and can be applied to various plants such as an energy plant including another power plant, a manufacturing plant, a chemical plant, and the like.

Among the constituents in the following embodiment, a constituent not described in an independent claim representing the most generic concept is described as an optional constituent.

### <<First Embodiment>>

Hereinafter, a plant abnormality monitoring apparatus and an abnormality monitoring method for the plant abnormality monitoring apparatus according to a first embodiment of the present invention will be described with reference to the drawings. The plant abnormality monitoring apparatus and the abnormality monitoring method for the plant abnormality monitoring apparatus based on the Mahalanobis distance according to the first embodiment are examples applied to a power plant using an industrial gas turbine.

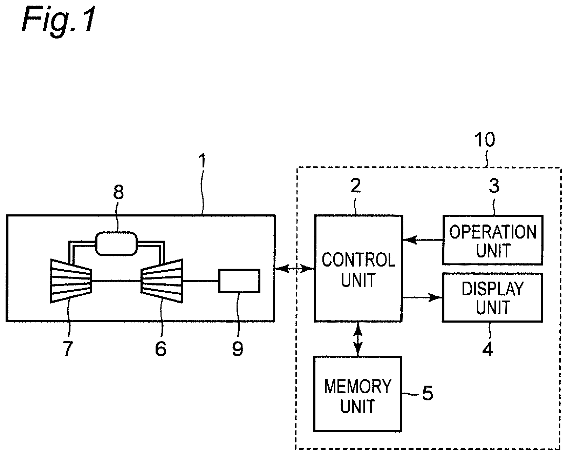

Fig. 1 is a block diagram schematically illustrating a configuration of an abnormality monitoring apparatus 10 for monitoring a gas turbine power plant 1. In Fig. 1, the gas turbine power plant 1 has respective facilities that a normal power plant has, and includes main devices such as a turbine 6, a compressor 7, a combustion chamber 8, and a generator 9, as a gas turbine.

The abnormality monitoring apparatus 10 according to the first embodiment continuously monitors behavior of the gas turbine power plant 1 in operation. To the abnormality monitoring apparatus 10, various pieces of measurement data from each facility/device which is a monitoring target in the gas turbine power plant 1 is sequentially transmitted as state quantities. For example, various pieces of measurement data such as the position, temperature, pressure, and vibration in each facility/device of the gas turbine are input to the abnormality monitoring apparatus 10 as state quantities of each factor.

For example, the abnormality monitoring apparatus 10 has a configuration in which a plurality of state quantities from the respective devices of the gas turbine are input to a control unit 2 and are processed by the abnormality monitoring method to be described later, and an abnormal condition in the gas turbine power plant 1 is detected. The control unit 2 is, a computer system configured of, for example, a microprocessor, a ROM, a RAM, a hard disk unit, a display unit, a keyboard, a mouse, and the like. The RAM or the hard disk unit stores a computer program for the abnormality monitoring method according to the present embodiment.

In addition, the abnormality monitoring apparatus 10 includes a memory unit 5 which stores various pieces of data, a display unit 4 capable of displaying various pieces of data, and an operation unit 3 which enables a user to issue various commands to the control unit 2 or the like. The operation unit 3 includes an input means for inputting various commands. The display unit 4 is configured to be able to display various input commands.

### (Abnormality Monitoring Method)

Next, the abnormality monitoring method using the abnormality monitoring apparatus 10 according to the first embodiment configured as described above will be described. In the abnormality monitoring apparatus 10, a Mahalanobis unit space is created according to state quantities obtained from data (reference data) in the respective facilities/devices during a normal operation of the gas turbine power plant 1. This unit space is an aggregate of data serving as a criterion for determining whether or not the operation condition of the gas turbine power plant 1 is a normal operation. Examples of the state quantities in the gas turbine power plant 1 include many state quantities regarding various devices, such as temperature, pressure, vibration, and rotation speed of each unit in the gas turbine, examples of which include intake air temperature of the compressor 7, output of the generator 9, and vibration of a main shaft serving as an output shaft of the gas turbine.

In the plant-abnormality-monitoring method based on the Mahalanobis distance, a normal space (unit space) is created from the reference data, and the Mahalanobis distance is calculated as an indicator of the degree of deviation of the most recent measurement data for the unit space. As the calculated Mahalanobis distance is greater, it is determined that the degree of abnormality of the facilities of the gas turbine power plant which are monitoring targets is high.

However, the method for monitoring the abnormality of the facilities using the Mahalanobis distance from the unit space created from the reference data as described above has the following problem.

For example, in a case where some of the facilities are repaired or replaced due to maintenance or the like of the plant and the plant condition changes, if the unit space created from the reference data is used as it is as a target for the Mahalanobis distance, there is a possibility that a serious problem will occur such as detecting abnormality of the facilities/devices which are monitoring targets even though the facilities/devices are normal, or in contrast, not recognizing abnormality even if there is an abnormality in the facilities/devices.

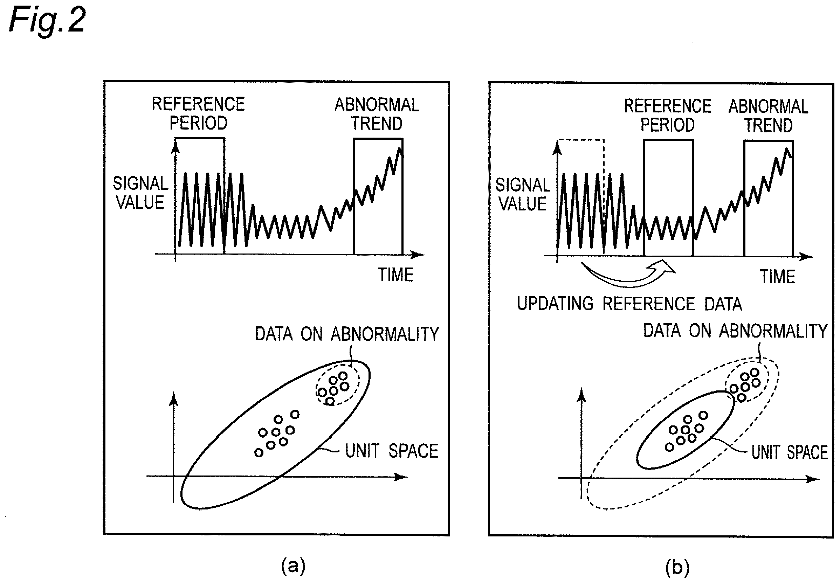

Fig. 2 is a diagram conceptually illustrating the above problem and the method for solving the problem. Two upper and lower diagrams of (a) of Fig. 2 conceptually illustrate a problem in the case of calculating the Mahalanobis distance according to reference data obtained before a change in the condition occurs. In (a) of Fig. 2, the upper graph illustrates a temporal change of the measurement data (state quantities), and the lower graph conceptually illustrates a unit space for calculating the Mahalanobis distance according to two pieces of measurement data (state quantities) indicated by the vertical axis and the horizontal axis.

Measurement data (signal value) represented by the upper graph in (a) of Fig. 2 indicates that amplitude becomes smaller due to maintenance or the like; however, the signal value gradually increases to indicate an abnormal trend. In the conventional abnormality monitoring method illustrated in (a) of Fig. 2, a fixed period before the amplitude of the measurement data becomes small (before the change in the condition) is set as a reference period, and a unit space is created by using the reference data in the reference period. Therefore, the created unit space is an excessively enlarged unit space with respect to the condition where the amplitude of the measurement data becomes small. As a result, even if an actual measurement data (signal value) is an abnormal value after the change in the condition where the amplitude the measurement data becomes small, the unit space for calculating the Mahalanobis distance is large. Therefore, the Mahalanobis distance does not become a large value and the measurement data is not determined to have an abnormal value.

The cause of lowering sensitivity of abnormality detection as described above is as follows. In a case where dispersion of the measurement data changes due to maintenance or the like and fluctuation of the data becomes small, if the reference data obtained before the dispersion change is kept used, the unit space is excessively enlarged with respect to a normal condition after the dispersion has changed. As a result, a serious problem that sensitivity of abnormality detection lowers occurs.

In (b) of Fig. 2, the upper graph illustrates a temporal change in measurement data (state quantities), and illustrates a case where a fixed period after a change in the condition is set as a reference period, and a new unit space is created by using the measurement data in the reference period after the change in the condition as reference data. The lower graph in (b) of Fig. 2 illustrates a unit space for calculating the Mahalanobis distance according to two pieces of measurement data (state quantities) indicated by the vertical axis and the horizontal axis. The unit space (ellipse indicated by a solid line) illustrated in (b) of Fig. 2 is smaller than the unit space illustrated in (a) of Fig. 2 (ellipse indicated by a broken line in (b) of Fig. 2). Therefore, data at the time of abnormality detection in the measurement data after the change in the condition reliably deviates from the unit space.

In the abnormality monitoring method using the abnormality monitoring apparatus 10 according to the first embodiment of the present invention, it is possible to solve the problem illustrated in (a) of Fig. 2, and as illustrated in (b) of Fig. 2, it is possible to appropriately update the reference data with respect to the measurement data, to calculate the Mahalanobis distance serving as an indicator of the degree of deviation from the unit space, and to reliably detect an abnormality of the facilities.

In the abnormality monitoring method using the abnormality monitoring apparatus 10 according to the first embodiment of the present invention, the dispersion value of the reference data is compared with the dispersion value obtained from the measurement data in the most recent fixed period, and the reference data is updated according to the result of comparison.

In addition, in the abnormality monitoring method using the abnormality monitoring apparatus 10 according to the first embodiment of the present invention, when the Mahalanobis distance which is calculated from the measurement data increases, an increasing trend of the Mahalanobis distance is determined according to the magnitudes of the difference values calculated at a fixed interval (fixed width) for a Mahalanobis distance group in a fixed period, and the reference data is updated according to the result.

### (Low-Frequency-Component Removal Process on Measurement Data)

Hereinafter, in the abnormality monitoring method, an updating method for determining whether or not to update the reference data as described above will be described. In the case of determining whether nor not to update the reference data, when the measurement data in a predetermined determination period increases, it may be erroneously recognized that the dispersion value of the measurement data in the determination period increases.

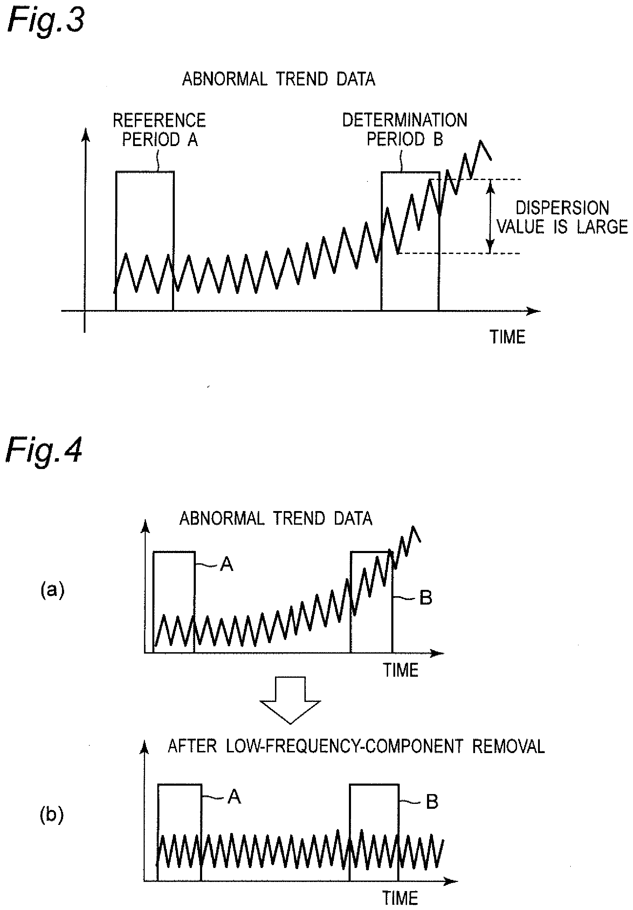

Fig. 3 is graph schematically illustrating an abnormal trend condition where the measurement data is rising. The graph of the measurement data in Fig. 3 illustrates a case where the dispersion value of the measurement data rising within a predetermined determination period B illustrated on the right is greater than the dispersion value of the measurement data within a predetermined reference period A illustrated on the left. As described above, in a case where the dispersion value of the measurement data in the determination period B is compared with the dispersion value of the reference data A and the reference data is updated according to the result of comparison, when a great change in the dispersion value in the determination period B is recognized as illustrated in Fig. 3, for example, when a change in the dispersion value in the determination period B exceeding a preset threshold value is recognized, the reference data in the reference period A is updated by using evaluation data which is the measurement data in the determination period B as reference data, and a unit space is created from the updated reference data. In a case where the unit space is created from the reference data updated in this manner, the unit space expands and unfavorable update of the reference data is performed such that the Mahalanobis distance decreases even in an abnormal trend.

In order to prevent unfavorable update of the reference data as described above, in the present embodiment, the measurement data is subjected to a high-pass filter (HPF) process for removing low-frequency components in advance. Fig. 4 conceptually illustrates an example of measurement data obtained after the measurement data illustrated in Fig. 3 is subjected to a low-frequency-component removal (HPF) process. Even in the case of abnormal trend data as illustrated in (a) of Fig. 4, by performing the low-frequency-component removal process, there is no change in the dispersion value due to the measurement data rising in the determination period B. Therefore, unnecessary updating of the reference data due to the dispersion value in the rising measurement data is prevented. As a result, even in a case where the dispersion value greatly changes due to the rising measurement data, an appropriate Mahalanobis distance regarding the measurement data (state quantities) in the determination period B is calculated from the unit space created according to the former reference data in the reference period A, and an accurate dispersion value comparison can be performed.

### (Determination by Using Mahalanobis Distance)

As described above, when the measurement data (detection signal: state quantities) greatly changes due to a change in the condition of the facilities/devices in the plant, the Mahalanobis distance with respect to the unit space increases. For example, when some of the facilities/devices are changed due to maintenance or the like and the condition changes significantly, the Mahalanobis distance changes suddenly. As described, when an increase in the Mahalanobis distance is not due to a facility abnormality in the plant, it is necessary to set reference data for newly defining a normal unit space after the condition change and to calculate the Mahalanobis distance according to the normal unit space. In contrast, when the Mahalanobis distance increases due to a facility abnormality in the plant, it is necessary to notify the user of the facility abnormality as soon as possible.

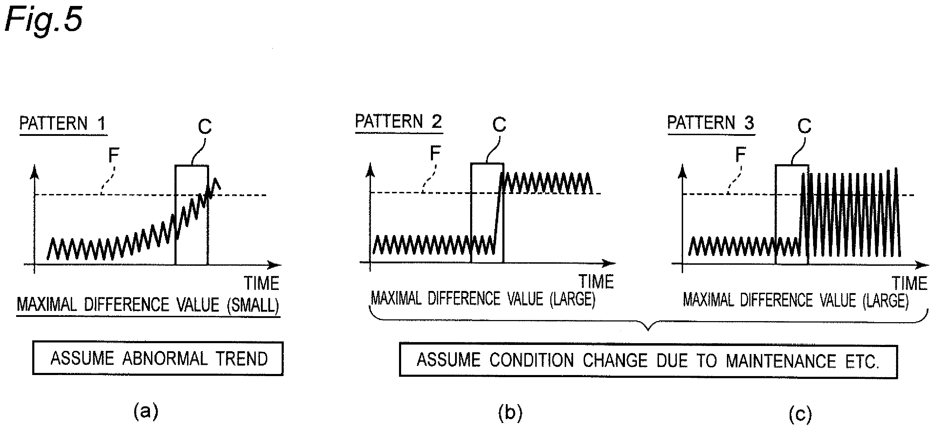

Fig. 5 illustrates specific three patterns of Mahalanobis distance data when the calculated Mahalanobis distance increases. The Mahalanobis distance data of each of the three patterns indicates a condition where the Mahalanobis distance data exceeds a threshold value (reference value F indicated by a broken line in Fig. 5) set in advance.

In Pattern 1 illustrated in (a) of Fig. 5, the calculated Mahalanobis distance data gradually increases and exceeds the threshold value. In Pattern 2 illustrated in (b) of Fig. 5, the calculated Mahalanobis distance data suddenly increases and then is kept exceeding the threshold value. In Pattern 3 illustrated in (c) of Fig. 5, the calculated Mahalanobis distance data suddenly changes, the amplitude becomes greater, and the maximal value of the amplitude exceeds the threshold value.

In three Patterns 1, 2 and 3 illustrated in Fig. 5, the difference value of the Mahalanobis distances in a fixed period (extraction period C) from a time point when the Mahalanobis distance exceeds the threshold value to a time point going back by a predetermined period from the above time point is calculated, and it is determined whether or not the plant is on an abnormal trend or whether or not it is necessary to update the reference data. By using the difference value between the Mahalanobis distances (MD values) having a fixed interval (fixed width) in a Mahalanobis distance group including a plurality of Mahalanobis distances in the extraction period C, it is at least possible to distinguish the Mahalanobis distance data of Pattern 1 from the Mahalanobis distance data of Patterns 2 and 3.

Note that the extraction period C may be a fixed period from a time point when the moving average value per unit time of the Mahalanobis distance exceeds the threshold value to a time point going back by a predetermined period from the above time point. Alternatively, the extraction period C may be a fixed period from a time point after a fixed period has passed from a time point when the Mahalanobis distance exceeds the threshold value to a time point going back by a predetermined period from the time point after the fixed period has passed.

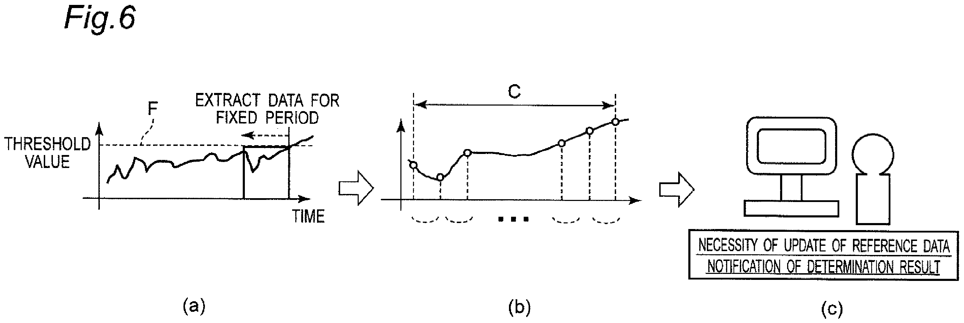

Fig. 6 is a diagram specifically illustrating a flow of calculating a difference value between Mahalanobis distances. (a) of Fig. 6 illustrates that a plurality of Mahalanobis distances are extracted in the extraction period C from the time point when the Mahalanobis distance (MD value) exceeds the threshold value (reference value F) set in advance to a time point going back by a fixed period from the above time point. Note that a calculation period shorter than an extraction period C may be set in advance, and a plurality of Mahalanobis distances in the extraction period C may be extracted. The extraction period C is a period from a time point when the moving average value of the Mahalanobis distances in the calculation period exceeds a threshold value set in advance to a time point going back by a fixed period from the above time point.

As illustrated in (b) of Fig. 6, the difference value between Mahalanobis distances (MD values) at a fixed interval in a Mahalanobis distance group extracted in the extraction period C is calculated. In a case where the calculated difference value is greater than a predetermined threshold value (set value E), a notification that necessity of a reference data update process is high is displayed on the display unit 4 of the abnormality monitoring apparatus 10 ((c) of Fig. 6).

As illustrated in the flow of Fig. 6, by calculating the difference value between the Mahalanobis distances (MD values) at the fixed interval in the extraction period C, the difference value between the Mahalanobis distances is small and the unit space based on the former reference data is maintained as it is in the case of above-described Pattern 1 illustrated in (a) of Fig. 5. As a result, since the calculated Mahalanobis distance of Pattern 1 exceeds the threshold value (reference value F), it is assumed that the plant is on an abnormal trend.

In contrast, in each of the cases of Patterns 2 and 3 illustrated in (b) and (c) of Fig. 5, the difference value of the Mahalanobis distances is large, which is considered to be due to maintenance or the like of the plant. Therefore, information indicating that the likelihood of requiring a reference data update process is high is displayed on the display unit 4.

### (Method for Determining Whether or not Update Process on Reference Data is Necessary)

Hereinafter, a method for determining whether or not a reference data update process is necessary in the abnormality monitoring method according to the first embodiment will be described more specifically.

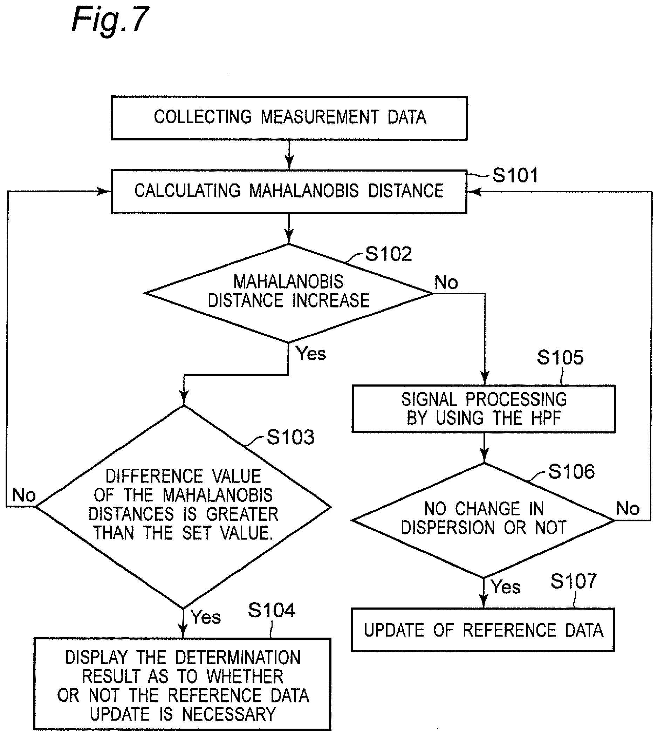

Fig. 7 is a flowchart of the method for determining whether or not the reference data update process is necessary in the abnormality monitoring method according to the first embodiment. Various pieces of measurement data from the respective facilities/devices which are monitoring targets in the gas turbine power plant 1 are sequentially collected and input to the abnormality monitoring apparatus 10 according to the first embodiment. In the abnormality monitoring apparatus 10, the sequentially input various pieces of measurement data (state quantities) are collected and stored in the memory unit 4, and the Mahalanobis distance (MD value) is calculated (S101)

In step S102, it is determined whether or not the Mahalanobis distance exceeds the threshold value (reference value F). In a case where the Mahalanobis distance exceeds the reference value F, difference values di (i = 1, 2, 3, ..., n) are calculated, each of the difference values di being a value between the Mahalanobis distances (MD values) at a fixed interval in the Mahalanobis distance group in the extraction period C from a time point when the Mahalanobis distance exceeds the reference value F to a time point going back by a fixed period from the above time point. The maximal difference value dmax among the difference values di is extracted. In step S103, it is determined whether or not the extracted maximal difference value dmax exceeds a set value G serving as a threshold value (maximal difference value dmax > set value G). In a case where the maximal difference value dmax exceeds the set value G, the likelihood that the reference data update process is necessary is high. Therefore, the display unit 4 displays the determination result as to whether or not the reference data update is necessary (S104).

In contrast, in a case where the maximal difference value dmax does not exceed the set value G in step S103, there is no need to update the reference data. Therefore, abnormality monitoring for the respective facilities/devices is continuously performed by using the Mahalanobis distance based on the unit space created from the reference data as it is. Abnormality monitoring is performed according to the calculated Mahalanobis distance (S101).

In a case where the Mahalanobis distance does not exceed the reference value F in step S102, the process proceeds to step S105 In step S105, the reference data and the most recent measurement data are subjected to a low-frequency-component removal process (HPF process). By performing the HPF process in this manner, an unnecessary reference data update process caused by false recognition that the dispersion value between the Mahalanobis distances has increased is excluded as described above.

In step S106, the Mahalanobis distance (MD value) is calculated again for target data subjected to the HPF process, and a dispersion value V1 of the Mahalanobis distance of reference data in the reference period A and a dispersion value V2 of the Mahalanobis distance of the most recent measurement data in the determination period B which arrives per fixed interval are calculated. As a result, in a case where the dispersion value V2 of the Mahalanobis distance in the determination period B is smaller than the dispersion value V1 of the Mahalanobis distance of the reference data and a proportion of the dispersion value V1 to the dispersion value V2 (V1/V2) is larger than a criterion value H set in advance, that is, in a case where V1 > V2 and (V1/V2) > the criterion value H, it is determined that a change in dispersion in the Mahalanobis distance calculated in step S101 is large.

As described above, when it is determined that a change in dispersion in the Mahalanobis distance is large in step S106, the reference data update process is performed in step S107. Note that in step 107, the reference data update process may be automatically performed; however, a configuration of notifying a user that the reference data update process is necessary may be adopted. In the case of performing the reference data update process, the reference data may be updated by using the determination period B as a new reference period. Alternatively, a reference period when the plant is normal may be set again and data obtained in the reference period may be used as the reference data to perform the update process. Then, in the abnormality monitoring method in which the reference data update process described above has been performed, abnormality monitoring for the power plant is continued, a unit space is created according to the updated reference data, and the Mahalanobis distance is calculated from the unit space.

In contrast, when it is determined in step S106 that a change in dispersion in the Mahalanobis distance is not large, the reference data is maintained as it is and the Mahalanobis distance is continuously calculated from the former unit space (S101).

### (Processes in steps S102 to S104)

Hereinafter, a specific description will be given of a method for determining whether or not the Mahalanobis distance increases and a method for determining a difference value of the Mahalanobis distances in steps S102 to S104 of the flowchart illustrated in Fig. 7, in the method for determining whether or not the reference data update process is necessary in the abnormality monitoring method according to the first embodiment described above.

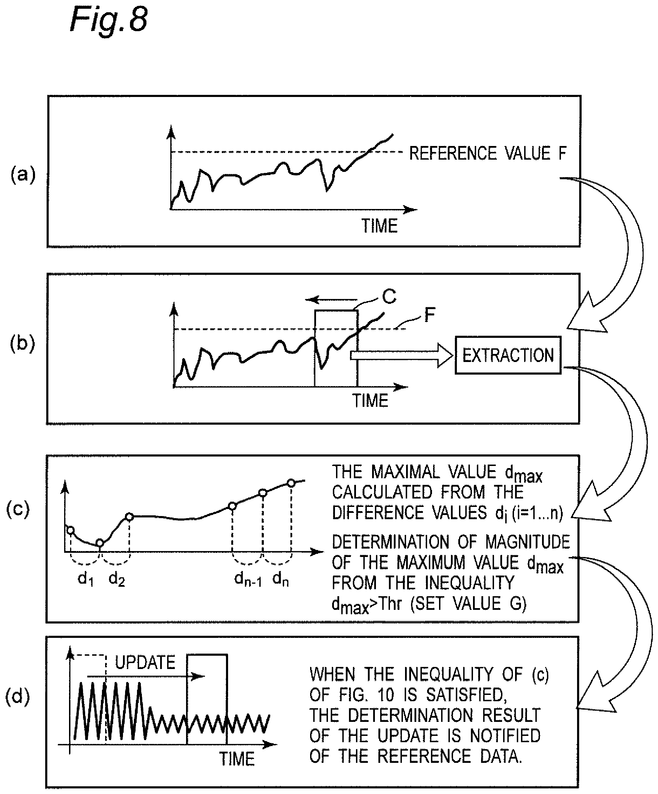

Fig. 8 is an explanatory diagram schematically illustrating the method for determining whether or not the Mahalanobis distance increases and the method for determining a difference value of the Mahalanobis distances in steps S102 to S104. (a) of Fig. 8 indicates that the Mahalanobis distance calculated in step S101 increases and exceeds the reference value F serving as a threshold value. That is, (a) of Fig. 8 indicates that the degree of abnormality of the facilities/devices which are monitoring targets is high. In the situation illustrated in (a) of Fig. 8, a Mahalanobis distance group in the extraction period C from a time point when the Mahalanobis distance exceeds the reference value F to a time point going back by a fixed period from the above time point is extracted (see (b) of Fig. 8).

Difference values di (i = 1, ..., n) between the Mahalanobis distances at a fixed interval (fixed width) among a plurality of Mahalanobis distances of the extracted Mahalanobis distance group are calculated. The maximal difference value dmax is extracted from among the calculated difference values di. It is determined whether or not the extracted maximal difference value dmax exceeds the set value G set in advance (see (c) of Fig. 8). In a case where the maximal difference value dmax exceeds the set value G, it is considered that the Mahalanobis distance may exceed the reference value F not because there is an abnormality in the facilities of the plant but because some of the facilities are changed due to maintenance or the like. Therefore, the control unit 2 causes the display unit 4 to display the fact that the necessity of reference data update is high in order to notify the user of the fact. As a means for notifying that the likelihood that reference data update is necessary is high, in addition to displaying a notification on the display unit 4, a notification may be made by sound and/or light.

### (Processes in Step S105 to Step S107)

Next, in the flowchart illustrated in Fig. 7 described above, a description will be given of a process for comparing the dispersion value of the reference data and the dispersion value of the most recent measurement data, illustrated in steps S105 to S107.

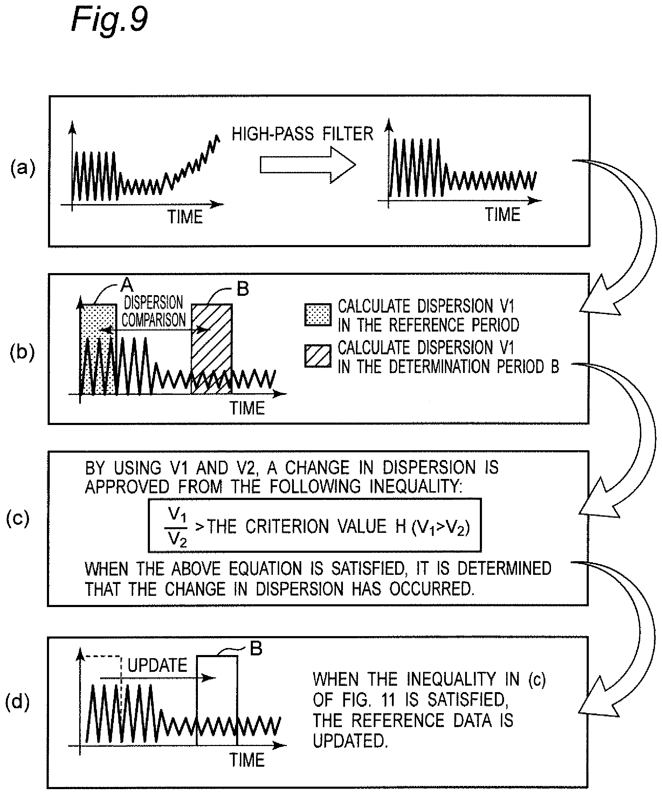

Fig. 9 is an explanatory diagram schematically illustrating a signal processing method using the high-pass filter (HPF) process which is a low-frequency-component removal process and a dispersion comparison method.

As illustrated in (a) of Fig. 9, as described above, the measurement data is subjected to signal processing by using the HPF for removing low-frequency components, and the reference data update process caused by an unfavorable increase in the dispersion value in the Mahalanobis distance is prevented. More specifically, the reference data and the measurement data in the determination period B from a time point when the most recent measurement data is measured to a time point going back by a fixed period from the above time are subjected to signal processing by using the HPF. Thus, the reference data and the most recent measurement data in the determination period B which are subjected to the signal processing by using the HPF are created.

Next, as illustrated (b) of Fig. 9, the Mahalanobis distances are calculated for the reference data and the most recent measurement data in the determination period B which are subjected to the signal processing by using the HPF, and the dispersion values of the reference data and the most recent measurement data subjected to the signal processing are calculated.

A test statistic (V1/V2, V1>V2) is calculated by using the calculated dispersion values and is compared with the predetermined criterion value H (see (c) of Fig. 9).

As described above, in a case where the calculated test statistic is larger than the predetermined criterion value H, a unit space based on the reference data which is the measurement data in the determination period B is automatically updated (see (d) of Fig. 9). The above-described process for comparing the dispersion value of the reference data and the dispersion value of the most recent measurement data is executed at fixed intervals, so that the power plant can constantly monitor abnormality with high accuracy.

As described above, in the abnormality monitoring method and the computer program for plant abnormality monitoring according to the first embodiment, a unit space is created from appropriate data (reference data) in a fixed period (reference period A), the unit space serving as a criterion when the Mahalanobis distance is calculated, or when it is determined whether or not the operation condition of the plant is normal according to the calculated Mahalanobis distance. In addition, it is possible to perform plant abnormality monitoring with high accuracy based on the Mahalanobis distance group of the measurement data in the determination period B, including the most recent measurement data and going back by a fixed period in order to evaluate the operation condition of the plant.

As described above with reference to the first embodiment, in the present invention, by using the abnormality monitoring method and the computer program for plant abnormality monitoring, it is possible to reliably detect a change in the condition of a plant even in a case where the condition of the plant changes due to maintenance or the like, to appropriately update reference data as necessary according to the detected change in the condition, and to constantly perform abnormality monitoring with high accuracy.

In addition, in the first embodiment, a configuration has been described where after the reference data and the most recent measurement data are subjected to the low-frequency-component removal process (step S105: HPF process), the process for comparing the dispersion values is performed (step S106). However, in the present invention, a configuration is possible where a process for comparing dispersion values is performed without performing a HPF process. In such a configuration, in step S107, in lieu of the reference-data update process which is performed automatically, a process of notifying a user that necessity of reference-data update process is high may be adopted.

In addition, part or entirety of the abnormality monitoring apparatus according to the present invention is a computer system specifically configured of a microprocessor, a ROM, a RAM, a hard disk unit, a display unit, a keyboard, a mouse, and the like. A computer program is stored in the RAM or the hard disk unit. Each of a control unit, an operation unit, a display unit, a memory unit, and the like achieves its function by the microprocessor operating according to the computer program. Here, the computer program is configured by combining a plurality of instruction codes indicating commands to a computer in order to achieve a predetermined function.

The scope of the invention is defined by the appended claims.

### Industrial Applicability

The abnormality monitoring method according to the present invention is applicable to various plants, and is an effective method capable of performing highly accurate abnormality monitoring on the plant to which the method is applied, and capable of continuously maintaining reliability of the plant at a high level.

### Reference Signs List

- 1: gas turbine power plant
- 2: control unit
- 3: operation unit
- 4: display unit
- 5: memory unit
- 6: turbine
- 7: compressor
- 8: combustor
- 9: generator
- 10: abnormality monitoring apparatus

## Claims

1. A plant-abnormality-monitoring method comprising:
a step of creating a unit space for calculating a Mahalanobis distance, wherein the unit space comprises an aggregate of plant data and serves as a criterion for determining an operation condition of a plant from reference data from a past monitoring target in the plant, wherein the reference data is obtained during a reference period of the plant during a normal operation of the monitoring target;
a step of collecting measurement data from the monitoring target in the operation condition of the plant;
a step of calculating a Mahalanobis distance of the measured data which is collected, according to the unit space which is created from an aggregate of the reference data;
a step of calculating and comparing a dispersion value of the reference data in the reference period and a dispersion value of measurement data in a most recent fixed period, which is shorter than the reference period, per fixed interval for the Mahalanobis distance and
a step of updating the reference data when a proportion of the dispersion value of the reference data in the reference period to the dispersion value of the measurement data in the most recent fixed period exceeds a criterion value serving as a threshold value.

2. The plant-abnormality-monitoring method according claim 1, wherein in the step of calculating and comparing the dispersion value of the reference data and the dispersion value of the measurement data per fixed interval, after the reference data and the measurement data are subjected to a low-frequency-component removal process, a dispersion value of the reference data which is subjected to the low-frequency-component removal process and a dispersion value of the measurement data which is subjected to the low-frequency-component removal process are calculated and compared per fixed interval.

3. The plant-abnormality-monitoring method according to claim 1 or 2 further comprising:
a step of calculating a difference value between Mahalanobis distances at a fixed interval in a Mahalanobis distance group in a fixed period when a Mahalanobis distance which is calculated exceeds a reference value serving as a threshold value, the Mahalanobis distance group including the Mahalanobis distance exceeding the reference value; and
a step of notifying that necessity of a process for updating the reference data is high when the difference value calculated exceeds a set value serving as a threshold value.

4. A computer program for plant abnormality monitoring comprising instructions that, when executed by a processor, cause the processor to carry out the following: comprising:
a procedure of creating a unit space for calculating a Mahalanobis distance, wherein the unit space comprises an aggregate of plant data
and serves as a criterion for determining an operation condition of a plant from reference data from a past monitoring target in the plant , wherein the reference data is obtained during a reference period of the plant during a normal operation of the monitoring target;
a procedure of collecting measurement data from the monitoring target in the operation condition of the plant;
a procedure of calculating a Mahalanobis distance of the measured data which is collected, according to the unit space which is created from an aggregate of the reference data;
a procedure of calculating and comparing a dispersion value of the reference data in the reference period and a dispersion value of measurement data in a most recent fixed period, which is shorter than the reference period, per fixed interval for the Mahalanobis distance which is calculated; and
a procedure of updating the reference data when a proportion of the dispersion value of the reference data in the reference period to the dispersion value of the measurement data in the most recent fixed period exceeds a criterion value serving as a threshold value.

5. The computer program for plant abnormality monitoring according claim 4, wherein in the procedure of calculating and comparing the dispersion value of the reference data and the dispersion value of the measurement data per fixed interval, after the reference data and the measurement data are subjected to a low-frequency-component removal process, a dispersion value of the reference data which is subjected to the low-frequency-component removal process and a dispersion value of the measurement data which is subjected to the low-frequency-component removal process are calculated and compared per fixed interval.

6. The computer program for plant abnormality monitoring according to claim 4 or 5 further comprising:
a procedure of calculating a difference value between Mahalanobis distances at a fixed interval in a Mahalanobis distance group in a fixed period when a Mahalanobis distance which is calculated exceeds a reference value serving as a threshold value, the Mahalanobis distance group including the Mahalanobis distance exceeding the reference value; and
a procedure of notifying that necessity of a process for updating the reference data is high when the difference value calculated exceeds a set value serving as a threshold value.

7. The plant-abnormality-monitoring method according claim 1, wherein in the step of calculating and comparing the dispersion value of the reference data and the dispersion value of the measurement data per fixed interval,
after the reference data and the measurement data are subjected to a low-frequency-component removal process, a dispersion value of the reference data which is subjected to the low-frequency-component removal process and a dispersion value of the measurement data which is subjected to the low-frequency-component removal process are calculated per fixed interval,
assuming that the dispersion value of the Mahalanobis distance of the reference data per the fixed interval is V1, and the dispersion value of the Mahalanobis distance of the measurement data per the fixed interval is V2, when V1 is larger than V2 and V1/V2 is larger than a predetermined criterion value (H), the reference data is updated.

8. The plant-abnormality-monitoring method according to claim 1, 2 or 7 further comprising:
a step of calculating a difference value (di) between Mahalanobis distances at a fixed interval in a Mahalanobis distance group in a fixed period when a Mahalanobis distance which is calculated exceeds a reference value serving as a threshold value, the Mahalanobis distance group including the Mahalanobis distance exceeding the reference value, and extracting the maximal difference value (dmax) among the difference values; and
a step of notifying that necessity of a process for updating the reference data is high when the maximal difference value extracted exceeds a set value serving as a threshold value.

9. The computer program for plant abnormality monitoring according claim 4, wherein in the procedure of calculating and comparing the dispersion value of the reference data and the dispersion value of the measurement data per fixed interval,
after the reference data and the measurement data are subjected to a low-frequency-component removal process, a dispersion value of the reference data which is subjected to the low-frequency-component removal process and a dispersion value of the measurement data which is subjected to the low-frequency-component removal process are calculated per fixed interval,
assuming that the dispersion value of the Mahalanobis distance of the reference data per the fixed interval is V1, and the dispersion value of the Mahalanobis distance of the measurement data per the fixed interval is V2, when V1 is larger than V2 and V1/V2 is larger than a predetermined criterion value (H), the reference data is updated.

10. The computer program for plant abnormality monitoring according to claim 4, 5 or 9 further comprising:
a procedure of calculating a difference value (di) between Mahalanobis distances at a fixed interval in a Mahalanobis distance group in a fixed period when a Mahalanobis distance which is calculated exceeds a reference value serving as a threshold value, the Mahalanobis distance group including the Mahalanobis distance exceeding the reference value, and extracting the maximal difference value (dmax) among the difference values; and
a procedure of notifying that necessity of a process for updating the reference data is high when the maximal difference value extracted exceeds a set value serving as a threshold value.

## Patentansprüche

1. Verfahren zum Überwachen von Anomalien bei Pflanzen, umfassend:
einen Schritt des Erzeugens eines Einheitsraums zum Berechnen eines Mahalanobis-Abstands, wobei der Einheitsraum ein Aggregat von Pflanzendaten umfasst und als ein Kriterium zum Bestimmen eines Betriebszustands einer Pflanze aus Referenzdaten von einem vergangenen Überwachungsziel in der Pflanze dient, wobei die Referenzdaten während einer Referenzperiode der Pflanze während eines normalen Betriebs des Überwachungsziels erhalten werden;
einen Schritt des Sammelns von Messdaten von dem Überwachungsziel in dem Betriebszustand der Pflanze;
einen Schritt des Berechnens eines Mahalanobis-Abstands der gemessenen Daten, die gesammelt werden, gemäß dem Einheitsraum, der aus einem Aggregat der Referenzdaten erzeugt wird;
einen Schritt des Berechnens und Vergleichens eines Dispersionswerts der Referenzdaten in der Referenzperiode und eines Dispersionswerts von Messdaten in einer jüngsten festgelegten Periode, die kürzer ist als die Referenzperiode, pro festgelegtem Intervall für den Mahalanobis-Abstand, und
einen Schritt des Aktualisierens der Referenzdaten, wenn ein Verhältnis des Dispersionswerts der Referenzdaten in der Referenzperiode zu dem Dispersionswert der Messdaten in der jüngsten festgelegten Periode einen Kriteriumwert, der als ein Schwellenwert dient, übersteigt.

2. Verfahren zum Überwachen von Anomalien bei Pflanzen nach Anspruch 1, wobei in dem Schritt des Berechnens und Vergleichens des Dispersionswerts der Referenzdaten und des Dispersionswerts der Messdaten pro festgelegtem Intervall, nachdem die Referenzdaten und die Messdaten einem Entfernungsprozess von Niederfrequenzkomponenten unterzogen werden, ein Dispersionswert der Referenzdaten, die dem Entfernungsprozess von Niederfrequenzkomponenten unterzogen werden, und ein Dispersionswert der Messdaten, die dem Entfernungsprozess von Niederfrequenzkomponenten unterzogen werden, pro festgelegtem Intervall berechnet und verglichen werden.

3. Verfahren zum Überwachen von Anomalien bei Pflanzen nach Anspruch 1 oder 2, weiter umfassend:
einen Schritt des Berechnens eines Differenzwerts zwischen Mahalanobis-Abständen bei einem festgelegten Intervall in einer Mahalanobis-Abstandsgruppe in einer festgelegten Periode, wenn ein Mahalanobis-Abstand, der berechnet wird, einen Referenzwert, der als ein Schwellenwert dient, übersteigt, wobei die Mahalanobis-Abstandsgruppe den Mahalanobis-Abstand einschließt, der den Referenzwert übersteigt; und
einen Schritt des Benachrichtigens, dass eine Notwendigkeit eines Prozesses zum Aktualisieren der Referenzdaten hoch ist, wenn der berechnete Differenzwert einen eingestellten Wert, der als ein Schwellenwert dient, übersteigt.

4. Computerprogramm zum Überwachen von Anomalien bei Pflanzen, das Anweisungen umfasst, die, wenn von einem Prozessor ausgeführt, den Prozessor veranlassen, das Folgende durchzuführen:
umfassend:
eine Prozedur des Erzeugens eines Einheitsraums zum Berechnen eines Mahalanobis-Abstands, wobei der Einheitsraum ein Aggregat von Pflanzendaten umfasst und als ein Kriterium zum Bestimmen eines Betriebszustands einer Pflanze aus Referenzdaten von einem vergangenen Überwachungsziel in der Pflanze dient, wobei die Referenzdaten während einer Referenzperiode der Pflanze während eines normalen Betriebs des Überwachungsziels erhalten werden;
eine Prozedur des Sammelns von Messdaten von dem Überwachungsziel in dem Betriebszustand der Pflanze;
eine Prozedur des Berechnens eines Mahalanobis-Abstands der gemessenen Daten, die gesammelt werden, gemäß dem Einheitsraum, der aus einem Aggregat der Referenzdaten erzeugt wird;
eine Prozedur des Berechnens und Vergleichens eines Dispersionswerts der Referenzdaten in der Referenzperiode und eines Dispersionswerts von Messdaten in einer jüngsten festgelegten Periode, die kürzer ist als die Referenzperiode, pro festgelegtem Intervall für den Mahalanobis-Abstand, der berechnet wird; und
eine Prozedur des Aktualisierens der Referenzdaten, wenn ein Verhältnis des Dispersionswerts der Referenzdaten in der Referenzperiode zu dem Dispersionswert der Messdaten in der jüngsten festgelegten Periode einen Kriteriumwert, der als ein Schwellenwert dient, übersteigt.

5. Computerprogramm zum Überwachen von Anomalien bei Pflanzen nach Anspruch 4, wobei in der Prozedur des Berechnens und Vergleichens des Dispersionswerts der Referenzdaten und des Dispersionswerts der Messdaten pro festgelegtem Intervall, nachdem die Referenzdaten und die Messdaten einem Entfernungsprozess von Niederfrequenzkomponenten unterzogen werden, ein Dispersionswert der Referenzdaten, die dem Entfernungsprozess von Niederfrequenzkomponenten unterzogen werden, und ein Dispersionswert der Messdaten, die dem Entfernungsprozess von Niederfrequenzkomponenten unterzogen werden, pro festgelegtem Intervall berechnet und verglichen werden.

6. Computerprogramm zum Überwachen von Anomalien bei Pflanzen nach Anspruch 4 oder 5, weiter umfassend:
eine Prozedur des Berechnens eines Differenzwerts zwischen Mahalanobis-Abständen bei einem festgelegten Intervall in einer Mahalanobis-Abstandsgruppe in einer festgelegten Periode, wenn ein Mahalanobis-Abstand, der berechnet wird, einen Referenzwert, der als ein Schwellenwert dient, übersteigt, wobei die Mahalanobis-Abstandsgruppe den Mahalanobis-Abstand einschließt, der den Referenzwert übersteigt; und
eine Prozedur des Benachrichtigens, dass eine Notwendigkeit eines Prozesses zum Aktualisieren der Referenzdaten hoch ist, wenn der berechnete Differenzwert einen eingestellten Wert, der als ein Schwellenwert dient, übersteigt.

7. Verfahren zum Überwachen von Anomalien bei Pflanzen nach Anspruch 1, wobei in dem Schritt des Berechnens und Vergleichens des Dispersionswerts der Referenzdaten und des Dispersionswerts der Messdaten pro festgelegtem Intervall,
nachdem die Referenzdaten und die Messdaten einem Entfernungsprozess von Niederfrequenzkomponenten unterzogen werden, ein Dispersionswert der Referenzdaten, die dem Entfernungsprozess von Niederfrequenzkomponenten unterzogen werden, und ein Dispersionswert der Messdaten, die dem Entfernungsprozess von Niederfrequenzkomponenten unterzogen werden, pro festgelegtem Intervall berechnet werden,
unter der Annahme, dass der Dispersionswert des Mahalanobis-Abstands der Referenzdaten pro festgelegtem Intervall V1 ist und der Dispersionswert des Mahalanobis-Abstands der Messdaten pro festgelegtem Intervall V2 ist, wenn V1 größer als V2 ist und V1/V2 größer als ein vorbestimmter Kriteriumwert (H) ist, die Referenzdaten aktualisiert werden.

8. Verfahren zum Überwachen von Anomalien bei Pflanzen nach Anspruch 1, 2 oder 7, weiter umfassend:
einen Schritt des Berechnens eines Differenzwerts (di) zwischen Mahalanobis-Abständen bei einem festgelegten Intervall in einer Mahalanobis-Abstandsgruppe in einer festgelegten Periode, wenn ein Mahalanobis-Abstand, der berechnet wird, einen Referenzwert, der als ein Schwellenwert dient, übersteigt, wobei die Mahalanobis-Abstandsgruppe den Mahalanobis-Abstand einschließt, der den Referenzwert übersteigt, und des Extrahierens des höchsten Differenzwerts (dmax) unter den Differenzwerten; und
einen Schritt des Benachrichtigens, dass eine Notwendigkeit eines Prozesses zum Aktualisieren der Referenzdaten hoch ist, wenn der höchste extrahierte Differenzwert einen eingestellten Wert, der als ein Schwellenwert dient, übersteigt.

9. Computerprogramm zum Überwachen von Anomalien bei Pflanzen nach Anspruch 4, wobei in der Prozedur des Berechnens und Vergleichens des Dispersionswerts der Referenzdaten und des Dispersionswerts der Messdaten pro festgelegtem Intervall,
nachdem die Referenzdaten und die Messdaten einem Entfernungsprozess von Niederfrequenzkomponenten unterzogen werden, ein Dispersionswert der Referenzdaten, die dem Entfernungsprozess von Niederfrequenzkomponenten unterzogen werden, und ein Dispersionswert der Messdaten, die dem Entfernungsprozess von Niederfrequenzkomponenten unterzogen werden, pro festgelegtem Intervall berechnet werden,
unter der Annahme, dass der Dispersionswert des Mahalanobis-Abstands der Referenzdaten pro festgelegtem Intervall V1 ist und der Dispersionswert des Mahalanobis-Abstands der Messdaten pro festgelegtem Intervall V2 ist, wenn V1 größer als V2 ist und V1/V2 größer als ein vorbestimmter Kriteriumwert (H) ist, die Referenzdaten aktualisiert werden.

10. Computerprogramm zum Überwachen von Anomalien bei Pflanzen nach Anspruch 4, 5 oder 9, weiter umfassend:
eine Prozedur des Berechnens eines Differenzwerts (di) zwischen Mahalanobis-Abständen bei einem festgelegten Intervall in einer Mahalanobis-Abstandsgruppe in einer festgelegten Periode, wenn ein Mahalanobis-Abstand, der berechnet wird, einen Referenzwert, der als ein Schwellenwert dient, übersteigt, wobei die Mahalanobis-Abstandsgruppe den Mahalanobis-Abstand einschließt, der den Referenzwert übersteigt, und des Extrahierens des höchsten Differenzwerts (dmax) unter den Differenzwerten; und
eine Prozedur des Benachrichtigens, dass eine Notwendigkeit eines Prozesses zum Aktualisieren der Referenzdaten hoch ist, wenn der höchste extrahierte Differenzwert einen eingestellten Wert, der als ein Schwellenwert dient, übersteigt.

## Revendications

1. Procédé de surveillance d'anomalies d'installation comprenant :
une étape de création d'un espace unitaire pour calculer une distance de Mahalanobis, dans lequel l'espace unitaire comprend un agrégat de données d'installation et sert de critère pour déterminer une condition de fonctionnement d'une installation à partir de données de référence provenant d'une cible de surveillance passée dans l'installation, dans lequel les données de référence sont obtenues pendant une période de référence de l'installation lors d'un fonctionnement normal de la cible de surveillance ;
une étape de collecte de données de mesure à partir de la cible de surveillance dans la condition de fonctionnement de l'installation ;
une étape de calcul d'une distance de Mahalanobis des données mesurées qui sont collectées, en fonction de l'espace unitaire qui est créé à partir d'un agrégat des données de référence ;
une étape de calcul et de comparaison d'une valeur de dispersion des données de référence dans la période de référence et d'une valeur de dispersion de données de mesure dans une période fixe la plus récente, qui est plus courte que la période de référence, par intervalle fixe pour la distance de Mahalanobis et
une étape de mise à jour des données de référence quand une proportion de la valeur de dispersion des données de référence dans la période de référence par rapport à la valeur de dispersion des données de mesure dans la période fixe la plus récente dépasse une valeur de critère servant de valeur seuil.

2. Procédé de surveillance d'anomalies d'installation selon la revendication 1, dans lequel dans l'étape de calcul et de comparaison de la valeur de dispersion des données de référence et de la valeur de dispersion des données de mesure par intervalle fixe, après que les données de référence et les données de mesure sont soumises à un procédé d'élimination de composantes à basse fréquence, une valeur de dispersion des données de référence qui sont soumises au procédé d'élimination de composantes à basse fréquence et une valeur de dispersion des données de mesure qui sont soumises au procédé d'élimination de composantes à basse fréquence sont calculées et comparées par intervalle fixe.

3. Procédé de surveillance d'anomalies d'installation selon la revendication 1 ou 2, comprenant en outre :
une étape de calcul d'une valeur de différence entre des distances de Mahalanobis à un intervalle fixe dans un groupe de distances de Mahalanobis dans une période fixe quand une distance de Mahalanobis qui est calculée dépasse une valeur de référence servant de valeur seuil, le groupe de distances de Mahalanobis incluant la distance de Mahalanobis dépassant la valeur de référence ; et
une étape de notification que la nécessité d'un procédé de mise à jour des données de référence est élevée quand la valeur de différence calculée dépasse une valeur définie servant de valeur seuil.

4. Programme informatique pour la surveillance d'anomalies d'installation comprenant des instructions qui, quand elles sont exécutées par un processeur, amènent le processeur à effectuer ce qui suit :
comprenant :
une procédure de création d'un espace unitaire pour calculer une distance de Mahalanobis, dans lequel l'espace unitaire comprend un agrégat de données d'installation et sert de critère pour déterminer une condition de fonctionnement d'une installation à partir de données de référence provenant d'une cible de surveillance passée dans l'installation, dans lequel les données de référence sont obtenues pendant une période de référence de l'installation lors d'un fonctionnement normal de la cible de surveillance ;
une procédure de collecte de données de mesure à partir de la cible de surveillance dans la condition de fonctionnement de l'installation ;
une procédure de calcul d'une distance de Mahalanobis des données mesurées qui sont collectées, en fonction de l'espace unitaire qui est créé à partir d'un agrégat des données de référence ;
une procédure de calcul et de comparaison d'une valeur de dispersion des données de référence dans la période de référence et d'une valeur de dispersion de données de mesure dans une période fixe la plus récente, qui est plus courte que la période de référence, par intervalle fixe pour la distance de Mahalanobis qui est calculée ; et
une procédure de mise à jour des données de référence quand une proportion de la valeur de dispersion des données de référence dans la période de référence par rapport à la valeur de dispersion des données de mesure dans la période fixe la plus récente dépasse une valeur de critère servant de valeur seuil.

5. Programme informatique pour la surveillance d'anomalies d'installation selon la revendication 4, dans lequel dans la procédure de calcul et de comparaison de la valeur de dispersion des données de référence et de la valeur de dispersion des données de mesure par intervalle fixe, après que les données de référence et les données de mesure sont soumises à un procédé d'élimination de composantes à basse fréquence, une valeur de dispersion des données de référence qui sont soumises au procédé d'élimination de composantes à basse fréquence et une valeur de dispersion des données de mesure qui sont soumises au procédé d'élimination de composantes à basse fréquence sont calculées et comparées par intervalle fixe.

6. Programme informatique pour la surveillance d'anomalies d'installation selon la revendication 4 ou 5, comprenant en outre :
une procédure de calcul d'une valeur de différence entre des distances de Mahalanobis à un intervalle fixe dans un groupe de distances de Mahalanobis dans une période fixe quand une distance de Mahalanobis qui est calculée dépasse une valeur de référence servant de valeur seuil, le groupe de distances de Mahalanobis incluant la distance de Mahalanobis dépassant la valeur de référence ; et
une procédure de notification que la nécessité d'un procédé de mise à jour des données de référence est élevée quand la valeur de différence calculée dépasse une valeur définie servant de valeur seuil.

7. Procédé de surveillance d'anomalies d'installation selon la revendication 1, dans lequel dans l'étape de calcul et de comparaison de la valeur de dispersion des données de référence et de la valeur de dispersion des données de mesure par intervalle fixe,
après que les données de référence et les données de mesure sont soumises à un procédé d'élimination de composantes à basse fréquence, une valeur de dispersion des données de référence qui sont soumises au procédé d'élimination de composantes à basse fréquence et une valeur de dispersion des données de mesure qui sont soumises au procédé d'élimination de composantes à basse fréquence sont calculées par intervalle fixe,
en supposant que la valeur de dispersion de la distance de Mahalanobis des données de référence par l'intervalle fixe est V1, et que la valeur de dispersion de la distance de Mahalanobis des données de mesure par l'intervalle fixe est V2, quand V1 est supérieur à V2 et V1/V2 est supérieur à une valeur de critère (H) prédéterminée, les données de référence sont mises à jour.

8. Procédé de surveillance d'anomalies d'installation selon la revendication 1, 2 ou 7 comprenant en outre :
une étape de calcul d'une valeur de différence (di) entre des distances de Mahalanobis à un intervalle fixe dans un groupe de distances de Mahalanobis dans une période fixe quand une distance de Mahalanobis qui est calculée dépasse une valeur de référence servant de valeur seuil, le groupe de distances de Mahalanobis incluant la distance de Mahalanobis dépassant la valeur de référence, et d'extraction de la valeur de différence maximale (dmax) parmi les valeurs de différence ; et
une étape de notification que la nécessité d'un procédé de mise à jour des données de référence est élevée quand la valeur de différence maximale extraite dépasse une valeur définie servant de valeur seuil.

9. Programme informatique pour la surveillance d'anomalies d'installation selon la revendication 4, dans lequel dans la procédure de calcul et de comparaison de la valeur de dispersion des données de référence et de la valeur de dispersion des données de mesure par intervalle fixe,
après que les données de référence et les données de mesure sont soumises à un procédé d'élimination de composantes à basse fréquence, une valeur de dispersion des données de référence qui sont soumises au procédé d'élimination de composantes à basse fréquence et une valeur de dispersion des données de mesure qui sont soumises au procédé d'élimination de composantes à basse fréquence sont calculées par intervalle fixe,
en supposant que la valeur de dispersion de la distance de Mahalanobis des données de référence par l'intervalle fixe est V1, et que la valeur de dispersion de la distance de Mahalanobis des données de mesure par l'intervalle fixe est V2, quand V1 est supérieur à V2 et V1/V2 est supérieur à une valeur de critère (H) prédéterminée, les données de référence sont mises à jour.

10. Programme informatique pour la surveillance d'anomalies d'installation selon la revendication 4, 5 ou 9 comprenant en outre :
une procédure de calcul d'une valeur de différence (di) entre des distances de Mahalanobis à un intervalle fixe dans un groupe de distances de Mahalanobis dans une période fixe quand une distance de Mahalanobis qui est calculée dépasse une valeur de référence servant de valeur seuil, le groupe de distances de Mahalanobis incluant la distance de Mahalanobis dépassant la valeur de référence, et d'extraction de la valeur de différence maximale (dmax) parmi les valeurs de différence ; et
une procédure de notification que la nécessité d'un procédé de mise à jour des données de référence est élevée quand la valeur de différence maximale extraite dépasse une valeur définie servant de valeur seuil.
